# EUROPÄISCHE PATENTSCHRIFT

(11) **EP 1 280 649 B1**
(45) Veröffentlichungstag und Bekanntmachung des Hinweises auf die Patenterteilung: **02.06.2004**
(21) Anmeldenummer: 01935991.8
(22) Anmeldetag: 24.04.2001
(51) Int. Cl.: B29C 47/02

(54) **VERFAHREN ZUR HERSTELLUNG VON MEHRSCHICHT-METALL-VERBUNDROHREN**
METHOD FOR PRODUCING MULTILAYER METAL COMPOSITE TUBES
PROCEDE DE PRODUCTION DE TUYAUX COMPOSITES METALLIQUES MULTICOUCHES

(30) Priorität: 10.05.2000 DE 10022823
(43) Veröffentlichungstag der Anmeldung: 05.02.2003
(73) Patentinhaber: Unicor Extrusionstechnik GmbH, 98544 Zella-Mehlis (DE)
(72) Erfinder: RAHN, Horst, 97437 Hassfurt (DE)
(74) Vertreter: Pöhlau, Claus, Dipl.-Phys.
(86) Internationale Anmeldenummer: PCT/DE2001/001562
(87) Internationale Veröffentlichungsnummer: WO 2001/085430

(56) Entgegenhaltungen:
- EP-A- 0 581 208
- DE-A- 4 323 838
- FR-A- 2 434 326
- US-A- 4 999 903
- DATABASE WPI Section Ch, Week 199120 Derwent Publications Ltd., London, GB; Class A32, AN 1991-143085 XP002177331 -& JP 03 077714 A (SEKISUI CHEM IND CO LTD), 3. April 1991 (1991-04-03)

## Beschreibung

Die Erfindung betrifft ein Verfahren zur Herstellung von Mehrschicht-Metall-Verbundrohren gemäss dem Oberbegriff des Anspruches 1.

Ein derartiges Verfahren ist aus der DE-A 43 23 838 oder aus der JP-A 03 077 714 bekannt.

Aus der DE 30 16 134 A1, der WO 88/03084 A1, der EP 0 353 977 A2, der EP 0 581 208 A1 oder aus der EP 0 920 972 A1 sind Verfahren bekannt, bei welchen der Metallstreifen zu einem Rohr umgeformt wird, wobei sich die beiden Längsränder des zum Rohr umgeformten Metallstreifens überlappen. Die sich überlappenden Längsränder werden verschweisst. Nach dem Verschweissen der sich überlappenden Längsränder wird dann an der Innenseite des Metallrohres die Kunststoff-Innenschicht und an der Aussenseite des Metallrohres die Kunststoff-Aussenschicht fest angebracht. Zu diesem Zwecke wird mit der Kunststoff-Innenschicht und mit der Kunststoff-Aussenschicht jeweils ein Haftvermittler extrudiert. Als Kunststoffe für die Innenund die Aussenschicht kommen vemetzte oder nicht vemetzte Kunststoffmaterialien zur Anwendung.

Mehrschicht-Metall-Verbundrohre mit verschweissten, sich überlappenden Längsrändern weisen insbesondere bei grösseren Durchmesser-Dimensionen, bei welchen die Wandstärke des Metallrohres entsprechend zunimmt, den Mangel auf, dass sich die überlappenden Längsränder infolge der Wanddicke bemerkbar machen ― was bei Verbundrohren kleinen Durchmessers und entsprechend dünnen Metallstreifen bzw. ―rohren unerheblich ist.

In der DE-Z "Werkstatt + Montagepraxis", Dipl.-Ing. Horst Rahn: "Rohrleitungen aus Kunststoff und Metall in der Sanitär- und Heizungstechnik", Seiten 30 bis 36, September/Oktober 1993, wird neben diesem oben erwähnten Verfahren mit sich überlappenden Längsränder des zum Rohr umgeformten Metallstreifens auch ein sog. Schweizer Verfahren beschrieben, bei welchem zuerst ein inneres Kunststoffrohr erzeugt wird, auf dem ein stumpf verschweisstes Metall- bzw. Aluminiumrohr angeordnet wird. Bei diesem Verfahren ist es erforderlich, dass das an seinen beiden Längsrändern stumpf verschweisste Rohr einen lichten Innendurchmesser besitzt, der geringfügig grösser ist als der Aussendurchmesser des Kunststoff-Innenrohres, um das Metallrohr auf das Kunststoff-Innenrohr aufschieben zu können. Nach dem Aufschieben des Metallrohres auf das Kunststoff-Innenrohr ist es erforderlich, das Metallrohr auf das Kunststoff-Innenrohr herunterzukalibrieren. Daran anschliessend wird dann das Metall- bzw. Aluminiumrohr durch Extrusion mit einem äusseren Kunststoffmantel überzogen. Um sicher Stumpfschweissen zu können, ist es jedoch erforderlich, dass das Metallrohr eine bestimmte Mindestwanddicke besitzt. Diese ist häufig mehr als doppelt so dick wie die Mindestwanddicke bei einer Verschweissung der sich überlappenden Längsränder eines zu einem Rohr umgeformten Metallstreifens.

Ein Verfahren zur Herstellung eines mindestens zwei Lagen aufweisenden Verbundrohres, wobei mindestens eine Lage aus einem Kunststoffmaterial und eine Lage aus Metall besteht, ist beispielsweise auch in der DE 43 10 272 A1 beschrieben. Dort wird vorgeschlagen, die Längsränder des zu einem Rohr umgeformten Metallstreifens in einem Profilierwerkzeug aufzubördeln und die aufgebördelten Längskanten dann mit einer Längsnaht-Schweisseinrichtung zu verschweissen. Dieses Verfahren ist relativ kompliziert und für eine preisgünstige Massenproduktion kaum bzw. nicht geeignet.

Die DE 195 36 698 C1 und die DE 44 04 492 A1 offenbaren Verfahren zur Herstellung von Mehrschicht-Metall-Verbundrohren, wobei ein Metallstreifen zu einem Rohr umgeformt und entlang seinen beiden Längsrändem verschweisst wird. Dabei wird gemäss der DE 195 36 698 C1 an das Metallrohr im wesentlichen bündig ein vorgefertigtes Kunststoff- Innenrohr angelegt. Dort wird also ein vorgefertigtes Kunststoff-Innenrohr mit einem zu einem Rohr umgeformten Metallstreifen kombiniert. Das stellt einen erheblichen apparativen Aufwand dar. Ausserdem wird dort das Metallrohr vor dem Längsnahtschweissen an den an der Längsnaht einander gegenüberliegenden Kanten schräg oder bogenförmig oder stufenförmig nach aussen profiliert, so dass zwischen den Kanten und der Aussenoberfläche des vorgefertigten Kunststoff-Innenrohres ein Luftraum verbleibt. Dieser Luftraum ist dort erforderlich, um während des Längsnahtschweissens eine Beeinträchtigung des vorgefertigten Kunststoff-Innenrohres zu vermeiden. Diese Profilierung der Längsränder des Metallstreifens stellt ebenfalls einen nicht zu vernachlässigenden Aufwand dar. Soweit diese Längsprofilierung nicht beim Längsnahtschweissen ohnehin verschwindet, ist bei diesem bekannten Verfahren auch noch eine Rückformung der profilierten Längsränder in die Ebene des vorgefertigten Aussenrohres erforderlich. Auch das stellt einen nicht zu vernachlässigenden Aufwand dar.

Gemäss der DE 44 04 492 A1 wird ein vorgefertigtes Kunststoff-Innenrohr mit einem Metallrohr kombiniert, wobei eine Metallfolie mit sich überlappenden Rändern auf das vorgefertigte Kunststoff- Innenrohr aufgebracht wird. Die sich überlappenden Ränder werden mit Hilfe eines Lasers verschweisst. Bei diesem bekannten Verfahren der zuletzt genannten Art kommt also nicht nur ein vorgefertigtes Kunststoff-Innenrohr zur Anwendung, sondern es wird ausserdem auch nur ein Metallrohr mit sich überlappenden Längsrändern hergestellt und entlang den Längsrändern verschweisst.

Der Erfindung liegt die Aufgabe zugrunde, die Vorteile eines Metallrohres mit sich überlappend verschweissten Längsränder mit kleiner Metallrohr-Wanddicke und entsprechender Flexibilität bzw. reduzierter Biegesteifheit auszunutzen, ohne dass sich eine Überlappung störend bemerkbar macht.

Diese Aufgabe wird erfindungsgemäss durch das Verfahren mit den Merkmalen des Anspruchs 1 gelöst.

Als vorteilhaft hat es sich hierbei erwiesen, wenn die beiden Längsränder mittels einer Laserschweisseinrichtung verschweisst werden. Eine andere Möglichkeit besteht darin, dass die beiden Längsränder mittels einer Elektrodenschweisseinrichtung, mittels einer Induktionsschweisseinrichtung oder mittels einer Flammenschweisseinrichtung verschweisst werden.

Dadurch, dass bei dem erfindungsgemässen Verfahren die beiden Längsränder des Metallrohres miteinander stumpf verschweisst werden, ergibt sich der Vorteil, dass die Längsränder des zum Rohr umgeformten Metallstreifens sich in keiner Weise störend bemerkbar machen.

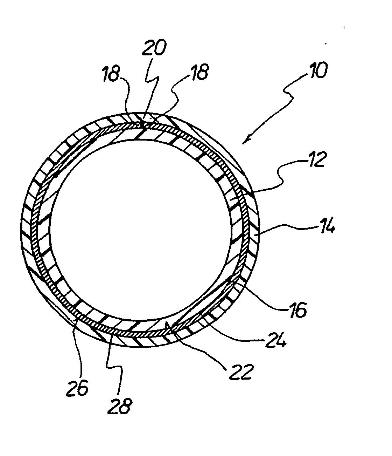

Ein Ausführungsbeispiel eines nach dem erfindungsgemässen Verfahren hergestellten Mehrschicht-Metall-Verbundrohres ist in der Zeichnung nicht massstabsgetreu dargestellt und wird nachfolgend beschrieben.

Die Figur zeigt im Querschnitt ein Mehrschicht-Metall-Verbundrohr 10 mit einer Kunststoff-Innenschicht 12, einer Kunststoff-Aussenschicht 14 und einem zwischen diesen vorgesehenem Metallrohr 16.

Zur Herstellung des Mehrschicht-Metall-Verbundrohres 10 wird wie folgt vorgegangen:

In einem ersten Arbeitsschritt wird ein Metallstreifen zu einem Rohr umgeformt und entlang seiner beiden Längsränder 18 stumpf verschweisst. Diese Stumpfschweissverbindung ist mit der Bezugsziffer 20 bezeichnet. Nach dem Stumpfschweissen der Längsränder 18 des zum Metallrohr 16 umgeformten Metallstreifens wird an der Innenseite 22 des Metallrohres 16 eine Haftvermittlerschicht 24 und die Kunststoff-Innenschicht 12 sowie an der Aussenseite 26 des Metallrohres 16 eine Haftvermittlerschicht 28 und die Kunststoff-Aussenschicht 14 durch Extrusion festhaftend angebracht. Ein Herunterkalibrieren des stumpf geschweissten Metallrohres 16 auf ein bereits fertiges inneres Kunststoffrohr 12, wie es bislang bei Verbundrohren mit stumpfgeschweissten Metallrohren üblich ist, entfällt bei dem erfindungsgemässen Verfahren.

Das erfindungsgemässe Verfahren kann beispielsweise in einer Anlage realisiert werden, wie sie in der PCT-Anmeldung PCT/DE 99/00224 beschrieben ist, wobei die Längsränder 18 des zum Metallrohr 16 umgeformten Metallstreifens sich jedoch nicht überlappen, was bedeutet, dass die Umformeinrichtung zum Umformen des Metallstreifens zum Metallrohr entsprechend modifiziert ist. Gleiches gilt für die Schweisseinrichtung, weil nicht überlappende Längsränder 18 verschweisst werden, sondern eine stumpfe Verschweissung der Längsränder 18 des zum Metallrohr umgeformten Metallstreifens erfolgt. Im übrigen kann die Anlage gleich ausgebildet sein, wie die in der erwähnten PCT/DE 99/00224 beschriebene Anlage, wobei es ausserdem möglich ist, die Produktionslinienlänge von bislang beispielsweise ca. 27 m auf bis zu 100 m zu verlängern.

## Patentansprüche

1. Verfahren zur Herstellung von Mehrschicht-Metall-Verbundrohren, wobei ein Metallstreifen zu einem Rohr (16) umgeformt und entlang seiner beiden Längsränder (18) verschweisst wird, und wobei an der Innenseite (22) des Metallrohres (16) eine Kunststoff-Innenschicht (12) und an der Aussenseite (26) des Metallrohres (16) eine Kunststoff-Aussenschicht (14) durch Extrusion angebracht wird, wobei der Metallstreifen derartig zu einem Rohr (16) umgeformt wird, dass die beiden Längsränder (18) des zum Rohr (16) umgeformten Metallstreifens ohne Durchmesseränderung aneinander stumpf angrenzen und stumpf verschweisst werden, und wobei unmittelbar nach dem Längsstumpfschweissen des Rohres (16) die Kunststoff-Aussenschicht (14) an das Rohr (16) extrudiert wird,
**dadurch gekennzeichnet ,**
**dass** die Kunststoff-Innenschicht (12) an das Rohr (16) unmittelbar nach dem Längsstumpfschweissen extrudiert wird.

2. Verfahren nach Anspruch 1,
**dadurch gekennzeichnet ,**
**dass** die beiden Längsränder (18) mittels einer Laserschweisseinrichtung verschweisst werden.

3. Verfahren nach Anspruch 1,
**dadurch gekennzeichnet ,**
**dass** die beiden Längsränder (18) mittels einer Elektroden-Schweisseinrichtung verschweisst werden.

4. Verfahren nach Anspruch 1,
**dadurch gekennzeichnet ,**
**dass** die beiden Längsränder (18) mittels einer Induktions-Schweisseinrichtung verschweisst werden.

5. Verfahren nach Anspruch 1,
**dadurch gekennzeichnet ,**
**dass** die beiden Längsränder (18) mittels einer Flammenschweisseinrichtung verschweisst werden.

## Claims

1. Method for producing multilayer metal composite tubes, a metal strip being formed into a tube (16) and welded along both its longitudinal edges (18), and a plastic inner layer (12) being applied by extrusion to the inner side (22) of the metal tube (16) and a plastic outer layer (14) being applied by extrusion to the outer side (26) of the metal tube (16), the metal strip being formed into a tube (16) in such a way that the two longitudinal edges (18) of the metal strip formed into the tube (16) butt against each other without any change in diameter and are butt-welded, and the plastic outer layer (14) being extruded onto the tube (16) immediately after the longitudinal butt welding of the tube (16), **characterized in that** the plastic inner layer (12) is extruded onto the tube (16) immediately after the longitudinal butt welding.

2. Method according to Claim 1, **characterized in that** the two longitudinal edges (18) are welded by means of a laser welding device.

3. Method according to Claim 1, **characterized in that** the two longitudinal edges (18) are welded by means of an electrode welding device.

4. Method according to Claim 1, **characterized in that** the two longitudinal edges (18) are welded by means of an induction welding device.

5. Method according to Claim 1, **characterized in that** the two longitudinal edges (18) are welded by means of a flame welding device.

## Revendications

1. Procédé pour la fabrication de tuyaux de liaison métallique à couches multiples, du type dans lequel une bande métallique est amenée à la forme d'un tube (16) et est soudé le long de ses bords longitudinaux (18), sur la face interne (22) du tube métallique (16) étant déposée par extrusion une couche intérieure de matière plastique (12) et sur la face externe (26) du tube métallique (16) étant déposée par extrusion une couche extérieure de matière plastique (14), la bande métallique étant mise en forme de tube d'une manière telle que les deux bords longitudinaux (18) de la bande métallique mise sous forme d'un tube (16) sont délimités à ras bord l'une de l'autre sans modification de diamètre et sont soudés à ras bord, et dans lequel directement après le soudage longitudinal bord à bord du tube (16) la couche extérieure (14) est extrudée sur le tube (16), **caractérisé en ce que** la couche intérieure de matière plastique (12) est extrudée sur le tube (16) directement après le soudage longitudinale bord à bord.

2. Procédé selon la revendication 1, **caractérisé en ce que** les deux bords longitudinaux (18) sont soudés ensemble au moyen d'un système de soudage à laser.

3. Procédé selon la revendication 1, **caractérisé en ce que** les deux bords longitudinaux (18) sont soudés ensemble au moyen d'un système de soudage à électrodes.

4. Procédé selon la revendication 1, **caractérisé en ce que** les deux bords longitudinaux (18) sont soudés ensemble au moyen d'un système de soudage à induction.

5. Procédé selon la revendication 1, **caractérisé en ce que** les deux bords longitudinaux (18) sont soudés ensemble au moyen d'un système de soudage à flamme.
